# EUROPEAN PATENT APPLICATION

(11) **EP 4 819 649 A1**
(43) Date of publication of application: **07.10.2026**
(21) Application number: 23959660.4
(22) Date of filing: 27.11.2023
(51) Int. Cl.: H04W 4/021

(54) **SENSING METHOD, NETWORK DEVICE, AND TERMINAL DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: RGTH
(86) International application number: PCT/CN2023/134267
(87) International publication number: WO 2025/111733

(57) **Abstract**

The present application relates to a sensing method, a network device, and a terminal device. The method comprises: a first network device determining the departure of a sensing target or a sensing node from a target area; and the first network device sending a sensing task release request to the sensing node. The embodiments of the present application can avoid the interruption of a sensing task caused by the movement of a sensing node and/or the movement of a sensing target, and ensure the continuity of the sensing task.

## Description

### TECHNICAL FIELD

The present application relates to the field of communications, and more specifically, to a sensing method, a network device and a terminal device.

### BACKGROUND

In the sensing technology, when a sensing node and/or a sensing target moves, it may cause the sensing node to no longer be able to cover the sensing target, resulting in interruption of a sensing task. How to avoid the interruption of the sensing task caused by the movement of the sensing node and/or the sensing target is a problem that needs to be solved.

### SUMMARY

Embodiments of the present application provide a sensing method, a network device and a terminal device, which can avoid interruption of a sensing task caused by the movement of a sensing node and/or a sensing target, thereby ensuring the continuity of the sensing task.

The embodiments of the present application provide a sensing method, and the method includes:
determining, by a first network device, that a sensing target or a sensing node leaves a target area; and
transmitting, by the first network device, a sensing task release request to the sensing node.

The embodiments of the present application provide a sensing method, and the method includes:
receiving, by a second network device or a terminal device, an update message transmitted by a first network device, where the update message includes at least one of: target object information or an updated first area; and
transmitting, by the second network device or the terminal device, an update response, where the update response includes at least one of: acknowledgment information, the target object information or the updated first area.

The embodiments of the present application provide a sensing method, and the method includes:
receiving, by a third network device, a location request transmitted by a first network device, where the location request includes at least one of: a second area or information of a sensing node; and
transmitting, by the third network device, a location response to the first network device.

The embodiments of the present application provide a first network device, and the first network device includes:
a first processing unit, configured to determine that a sensing target or a sensing node leaves a target area; and
a first transceiving unit, configured to transmit a sensing task release request to the sensing node.

The embodiments of the present application provide a second network device, and the second network device includes:
a second transceiving unit, configured to receive an update message transmitted by a first network device, where the update message includes at least one of: target object information or an updated first area; and further configured to transmit an update response, where the update response includes at least one of: acknowledgment information, the target object information or the updated first area.

The embodiments of the present application provide a terminal device, and the terminal device includes:
a third transceiving unit, configured to receive an update message transmitted by a first network device, where the update message includes at least one of: target object information or an updated first area; and further configured to transmit an update response, where the update response includes at least one of: acknowledgment information, the target object information or the updated first area.

The embodiments of the present application provide a third network device, and the third network device includes:
a fourth transceiving unit, configured to receive a location request transmitted by a first network device, where the location request includes at least one of: a second area or information of a sensing node; and further configured to transmit a location response to the first network device.

The embodiments of the present application provide a terminal device, and the terminal device includes: a transceiver, a processor and a memory. The memory is configured to store a computer program; the transceiver is configured to communicate with other devices; and the processor is configured to invoke the computer program stored in the memory and execute the computer program, to cause the terminal device to perform the sensing method mentioned above.

The embodiments of the present application provide a network device, and the network device includes: a transceiver, a processor and a memory. The memory is configured to store a computer program; the transceiver is configured to communicate with other devices; and the processor is configured to invoke the computer program stored in the memory and execute the computer program, to cause the network device to perform the sensing method mentioned above.

The embodiments of the present application provide a chip for implementing the sensing method mentioned above.

Specifically, the chip includes a processor, configured to invoke a computer program from a memory and execute the computer program, to cause a device equipped with the chip to perform the sensing method mentioned above.

The embodiments of the present application provide a computer-readable storage medium for storing a computer program which, when executed by a device, causes the device to perform the sensing method mentioned above.

The embodiments of the present application provide a computer program product including computer program instructions, and the computer program instructions cause a computer to perform the sensing method mentioned above.

The embodiments of the present application provide a computer program which, when executed on a computer, causes the computer to perform the sensing method mentioned above.

In the embodiments of the present application, the first terminal device determines whether the sensing target or the sensing node leaves the target area; and when the sensing target or the sensing node leaves the target area, the sensing task release request is transmitted to the sensing node to release the current sensing task, so as to avoid the interruption of the sensing task caused by the movement of the sensing node and/or the sensing target, thereby ensuring the continuity of the sensing task.

### BRIEF DESCRIPTION OF THE DRAWINGS

FIG. 1 is a schematic diagram of a 5th-Generation (5G) network system architecture.
FIG. 2 is an exemplary architecture diagram of communication and sensing integration in beyond 5G (B5G).
FIG. 3 is a schematic flowchart of a sensing method 300 according to an embodiment of the present application.
FIG. 4 is a schematic flowchart of a sensing method 400 according to an embodiment of the present application.
FIG. 5 is a schematic flowchart of a sensing method 500 according to an embodiment of the present application.
FIG. 6 is a flowchart of an implementation of Embodiment I of the present application.
FIG. 7 is a flowchart of an implementation of Embodiment II of the present application.
FIG. 8 is a schematic block diagram of a first network device 800 according to an embodiment of the present application.
FIG. 9 is a schematic block diagram of a second network device 900 according to an embodiment of the present application.
FIG. 10 is a schematic block diagram of a terminal device 1000 according to an embodiment of the present application.
FIG. 11 is a schematic block diagram of a third network device 1100 according to an embodiment of the present application.
FIG. 12 is a schematic block diagram of a communication device according to an embodiment of the present application.
FIG. 13 is a schematic block diagram of a chip according to an embodiment of the present application.

### DETAILED DESCRIPTION

Technical solutions in the embodiments of the present application will be described below in conjunction with accompanying drawings in the embodiments of the present application.

The technical solutions in the embodiments of the present application may be applied to various communication systems, such as: a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial networks (NTN) system, a universal mobile telecommunication system, a wireless local area network (WLAN), wireless fidelity (WiFi), a 5th-Generation (5G) communication system, or other communication systems.

Generally speaking, conventional communication systems support a limited number of connections and are relatively easy to implement. However, with the development of communication technologies, mobile communication systems support not only the conventional communications but also communications such as device to device (D2D) communication, machine to machine (M2M) communication, machine type communication (MTC), vehicle to vehicle (V2V) communication, or vehicle to everything (V2X) communication. The embodiments of the present application may also be applied to such communication systems.

In an implementation, the communication system in the embodiments of the present application may be applied to a carrier aggregation (CA) scenario, a dual connectivity (DC) scenario, or a standalone (SA) networking scenario.

In an implementation, the communication system in the embodiments of the present application may be applied to an unlicensed spectrum. The unlicensed spectrum may also be considered as a shared spectrum. Alternatively, the communication system in the embodiments of the present application may be applied to a licensed spectrum. The licensed spectrum may also be considered as an unshared spectrum.

In the embodiments of the present application, various embodiments are described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other process devices connected to a wireless modem, a vehicle-mounted device, a wearable device, a terminal device in a next-generation communication system (such as an NR network), a terminal device in a future evolved public land mobile network (PLMN), or the like.

In the embodiments of the present application, the terminal device may be deployed on land, including indoor or outdoor, handheld, wearable or vehicle-mounted, or may also be deployed on water (e.g., on a ship), or may also be deployed in air (e.g., on an airplane, a balloon, and a satellite).

In the embodiments of the present application, the terminal device may be a mobile phone, a pad, a computer with wireless transceiving functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which may also be referred to as a wearable smart device, is a generic term for devices capable of being worn, into which the daily wear is intelligently designed and developed by applying wearable technologies, such as glasses, gloves, watches, clothing, or shoes. The wearable device is a portable device that is worn directly on the body, or integrated into a user's clothing or accessories. The wearable device is not only a hardware device, but also a device that achieves powerful functions through software support, data interaction or cloud interaction. Generalized wearable smart devices include full-featured and large-sized devices that may implement full or partial functionality without relying on smart phones, such as a smart watch or smart glasses, and devices that focus on a specific type of application functionality only and need to be used in conjunction with other devices (such as smart phones), such as various smart bracelets or smart jewelry for monitoring physical signs.

In embodiments of the present application, the network device may be a device used for communicating with a mobile device. The network device may be an access point (AP) in WLAN, an evolved base station (Evolutional NodeB, eNB or eNodeB) in LTE, a relay station or an access point, an in-vehicle device, a wearable device, a network device (gNB) in an NR network, or a network device in a future evolved PLMN network, or a network device in an NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water or other places.

In the embodiments of the present application, the network device may provide services for a cell, and the terminal device communicates with the network device through transmission resources (e.g., frequency domain resources, or in other words, frequency spectrum resources) used by the cell. The cell may be a cell corresponding to the network device (e.g., a base station). The cell may belong to a macro base station or belong to a base station corresponding to a small cell. The small cell here may include a metro cell, a micro cell, a pico cell, a femto cell or the like. These small cells have characteristics of small coverage range and low transmit power, which are applicable for providing a data transmission service with high rate.

It should be understood that in the embodiments of the present application, a device having a communication function in a network/system may be referred to as a communication device. The communication device may include a network device and a terminal device, which have the communication function. The network device and the terminal device may be specific devices in the embodiments of the present application, and will not be detailed further here. The communication devices may further include other devices in the communication system, such as a network controller, a mobile management entity or other network entities, which are not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent three cases that: A exists alone, both A and B exist, and B exists alone. In addition, the character "/" herein generally means that related objects before and after "/" are in an "or" relationship.

It should be understood that "indicate" mentioned in the embodiments of the present application may mean a direct indication, or may mean an indirect indication, or may mean that there is an association relationship. By way of example, A indicating B may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence relationship between the two, or may mean that there is an associated relationship between the two, or may mean a relationship of indicating and being indicated, a relationship of configuring and being configured, or the like.

To facilitate understanding of the technical solutions in the embodiments of the present application, the related technologies of the embodiments of the present application will be described below. The following related technologies, as optional solutions, may be arbitrarily combined with the technical solutions of the embodiments of the present application, which all fall within the protection scope of the embodiments of the present application.

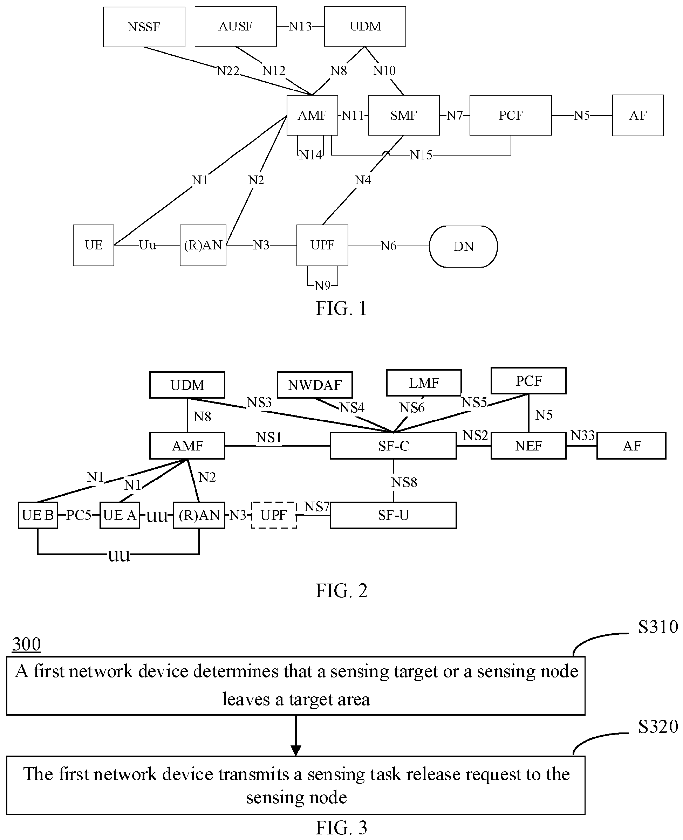

FIG. 1 is a schematic diagram of a 5G network system architecture. The UE performs an access stratum connection with an access network (AN) via a Uu interface to exchange access stratum messages and transmit wireless data. The UE performs a non-access stratum (NAS) connection with an access and mobility management function (AMF) via an N1 interface to exchange NAS messages. The AMF is a mobility management function in the core network, and a session management function (SMF) is a session management function in the core network. In addition to performing mobility management on the UE, the AMF is also responsible for forwarding session management-related messages between the UE and the SMF. A policy control function (PCF) is a policy management function in the core network, and responsible for formulating policies related to mobility management, session management, charging and so on for the UE. A user plane function (UPF) is a user plane function in the core network, and transmits data with external data networks via an N6 interface and with the AN via an N3 interface.

Because radio electromagnetic wave signals used by cellular networks not only can be used for wireless data transmission and communication purposes but also have environmental sensing capabilities, such as user action or gesture recognition, respiration monitoring, terminal movement speed measurement, environmental imaging and weather monitoring, cellular networks can be used not only for communication and data transmission but also for acquiring sensing information. This technology is referred to as communication and sensing integration, or communication-sensing integration.

In the related art, for example, B5G networks support sensing capabilities. By adding a Sensing Function (SF) network element and corresponding procedures, the 3rd Generation Partnership Project (3GPP) network supports sensing functions. When an application function transmits a sensing request for a target UE to the core network of the 3GPP network, the core network, through the SF network element or the AMF, selects the correct access network device or assisting UE, triggers the capability for sensing-related radio measurements, initiates the measurements for sensing information, and generates a sensing result.

The main wireless sensing scenarios for communication and sensing integration are as follows:
1) base station echo sensing link (single-gNB sensing): a base station transmits a sensing signal and receives an echo signal;
2) inter-base station sensing link (gNB-gNB sensing): base station B receives a sensing signal transmitted by base station A;
3) radio interface uplink sensing link (UE-gNB uplink sensing): a base station receives a sensing signal transmitted by a terminal;
4) radio interface downlink sensing link (UE-gNB downlink sensing): a terminal receives a sensing signal transmitted by a base station;
5) terminal echo sensing link (single-UE sensing): a terminal transmits a sensing signal and receives an echo signal; and
6) inter-terminal sensing link (UE-UE sensing): terminal B receives a sensing signal transmitted by terminal A.

FIG. 2 is an exemplary architecture diagram of communication and sensing integration in B5G. Considering the large amount of data exchanged between the UE and the sensing network element, the UE may complete the necessary interactions for sensing services with the sensing network element by means of user plane data transmission. The UE may transmit sensing data to the SF user plane (SF-U) through the UPF by means of establishing a special protocol data unit (PDU) session. Meanwhile, for some sensing tasks, to save network resources, the sensing node may be allowed to perform partial processing, transmitting only a small amount of data to the SF through the control plane for processing. Here, SF-U may also have other names, or it may be co-located with a location management function (LMF), which is not limited here. FIG. 2 serves only as an exemplary architecture.

In the sensing technology, when a sensing node moves and/or a sensing target moves, it may cause the sensing node to no longer be able to cover the sensing target, resulting in interruption of a sensing service. Therefore, how to ensure the continuity of the sensing service is a problem that needs to be solved.

FIG. 3 is a schematic flowchart of a sensing method 300 according to an embodiment of the present application. Optionally, the method may be applied to the system illustrated in FIG. 1 or FIG. 2, but is not limited thereto. The method includes at least part of the following contents.

In S310: a first network device determines that a sensing target or a sensing node leaves a target area.

In S320: the first network device transmits a sensing task release request to the sensing node.

Further, the first network device may reinitiate sensing.

The first network device, in a case where the sensing target or sensing node leaves the target area, is able to release the original sensing task and triggers a new sensing task, so as to avoid interruption of the sensing task caused by the movement of the sensing target or sensing node.

In some embodiments, the first network device may include an SF.

In the embodiments of the present application, leaving the target area may refer to being about to leave or having already left the target area.

The process of the present embodiment may occur during the sensing process. For example, before step S310, the method further includes the following operations.

The first network device receives a sensing request transmitted by a second network device or a terminal device, where the sensing request includes at least one of: a first area or target object information.

The first network device performs sensing based on the sensing request. For example, the first network device selects and configures a sensing node based on the sensing request, receives sensing data transmitted by the sensing node, and performs sensing on the sensing target according to the sensing data.

In some embodiments, the second network device may include at least one of: an SF client, an application function network element (AF), a gateway mobile location center (GMLC), a network exposure function network element (NEF), or an AMF.

In some embodiments, the target object information may include at least one of: a target object identifier or identification information of a target object. The target object information may include at least one of: a UE ID associated with the target object or object feature information of the target object.

During the sensing process, the first network device determines whether the sensing target or sensing node leaves the target area and releases the sensing task when the sensing target or sensing node leaves the target area.

The process of the first network device determining whether the sensing target leaves the target area and the process of the first network device determining whether the sensing node leaves the target area are described below, respectively.

### (1) Regarding the first network device determining whether the sensing target leaves the target area

The sensing target may include a UE or a non-UE.

In some embodiments, the first network device determining that the sensing target leaves the target area includes:
the first network device receiving sensing data; and
the first network device determining, according to the sensing data, that the sensing target leaves the target area.

For example, after receiving the sensing data from the sensing node, the first network device may determine whether the sensing target is about to move out of the sensing area or has already moved out of the sensing area according to the sensing data. Alternatively, after receiving the sensing data from the sensing node, the first network device may determine a sensing result according to the sensing data and then determine whether the sensing target is about to move out of the sensing area or has already moved out of the sensing area according to the sensing result.

If it is determined that the sensing target is about to move out of the sensing area or has already moved out of the sensing area, the first network device transmits the sensing task release request to the current sensing node to stop the sensing task of the current sensing node. The first network device may also re-trigger a sensing task. When re-triggering a sensing task, the first network device may reselect a sensing node. For example, the first network device may select a suitable sensing node by using an updated first area. The updated first area may be determined based on a new location of the sensing target after it has moved.

Furthermore, the first network device may also transmit the updated first area to the device that initiated the sensing task, to facilitate the performance of subsequent sensing requests by the device that initiated the sensing task. For example, after the first network device determines that the sensing target leaves the target area, the method further includes the following operations.

The first network device transmits an update message to the second network device or the terminal device, where the update message includes at least one of: target object information or an updated first area.

The first network device receives an update response transmitted by the second network device or the terminal device, where the update response includes at least one of: acknowledgement information, the target object information or the updated first area.

### (2) Regarding the first network device determining whether the sensing node leaves the target area

The sensing node may include a UE.

In some embodiments, the first network device determining that the sensing node leaves the target area includes:
the first network device transmitting a location request to a third network device, where the location request includes at least one of: a second area or information of the sensing node;
the first network device receiving a location response transmitted by the third network device; and
the first network device determining, according to the location response, that the sensing node leaves the target area.

The location response may include location information of the sensing node. According to the location information of the sensing node transmitted by the third network device, the first network device is able to determine whether the sensing node is leaving or has already left the target area.

In some embodiments, the third network device includes at least one of: a GMLC, an LMF, an AMF or an NEF. The third network device is capable of identifying the locations of various UEs within its coverage area. Therefore, the first network device may subscribe to the location information of the UE serving as a sensing node from the third network device. Based on the subscription of the first network device, the third network device feeds back the location information of the sensing node to the first network device.

There are at least the following three ways for the first network device to subscribe to the location information of the sensing node from the third network device.

First, the first network device transmits the information of the sensing node (e.g., a sensing node identifier) to the third network device, and the third network device feeds back the location information of the sensing node to the first network device; alternatively, the third network device feeds back the location information of the sensing node to the first network device multiple times, for example, periodically transmitting the location information of the sensing node to the first network device.

Second, the first network device transmits the information of the sensing node (e.g., a sensing node identifier) to the third network device; and when the third network device detects that the location of the sensing node has changed or that the change in the location of the sensing node meets a predetermined requirement, the third network device feeds back the location information of the sensing node to the first network device or reports to the first network device that the location of the sensing node has changed.

Third, the first network device transmits the information of the sensing node (e.g., a sensing node identifier) and the second area to the third network device; and when the third network device detects that the sensing node is about to or has already moved out of the second area, the third network device feeds back the location information of the sensing node to the first network device or reports to the first network device that the sensing node is about to or has already moved out of the second area.

The above second area may be an area indicated in the sensing request received by the first network device, or may be an area determined by the first network device, based on the location information of the sensing target and the location information of the sensing node before it moved.

For example, before the first network device transmits the location request to the third network device, the method further includes: the first network device determining the second area according to a first area included in the sensing request.

As another example, before the first network device transmits the location request to the third network device, the method further includes: the first network device determines the second area according to at least one of target location information or location information of the sensing node. The target location information includes the location information of the sensing target, and the target location information may be determined by the first network device according to the received sensing data; and the location information of the sensing node refers to the location information of the sensing node before it moves.

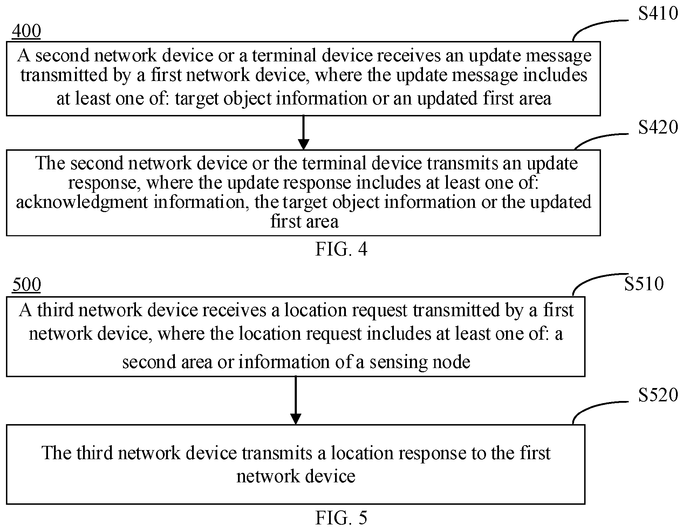

The embodiments of the present application further provide a sensing method. FIG. 4 is a schematic flowchart of a sensing method 400 according to an embodiment of the present application. Optionally, the method may be applied to the system illustrated in FIG. 1 or FIG. 2, but is not limited thereto. The method includes at least part of the following contents.

In S410, a second network device or a terminal device receives an update message transmitted by a first network device, where the update message includes at least one of: target object information or an updated first area.

In S420, the second network device or the terminal device transmits an update response, where the update response includes at least one of: acknowledgment information, the target object information or the updated first area.

The second network device may include at least one of: an SF client, an AF, a GMLC, an NEF, or an AMF.

The first network device may include an SF.

The second network device or the terminal device may be a device that issues a sensing request. During the execution of a sensing task, when the second network device or the terminal device receives the update message from the first network device, it is able to determine that the sensing target has left the target area requested by the sensing request and has moved to an updated target area. Therefore, the second network device or the terminal device may adopt the updated first area when issuing subsequent sensing requests.

In some embodiments, the target object information includes at least one of: a target object identifier or identification information of the target object. Here, the identification information of the target object may include at least one of: a user equipment identifier associated with the target object and object feature information of the target object.

In some embodiments, before the step S410, the method further includes: the second network device or the terminal device transmitting a sensing request, where the sensing request includes at least one of: a first area or target object information. The second network device or the terminal device may directly transmit the sensing request to the first network device; alternatively, the second network device or the terminal device may transmit the sensing request to another network device, and then that network device forwards the sensing request to the first network device.

For a specific example of the second network device performing the method 400 in the present embodiment, reference may be made to the relevant descriptions of the second network device in the above method 300. For the sake of brevity, details are not repeated here.

The embodiments of the present application further provide a sensing method. FIG. 5 is a schematic flowchart of a sensing method 500 according to an embodiment of the present application. Optionally, the method may be applied to the system illustrated in FIG. 1 or FIG. 2, but is not limited thereto. The method includes at least part of the following contents.

In S510, a third network device receives a location request transmitted by a first network device, where the location request includes at least one of: a second area or information of a sensing node.

In S520, the third network device transmits a location response to the first network device.

The third network device includes at least one of: a GMLC, an LMF, an AMF, or an NEF.

The first network device may include an SF.

The third network device may provide the first network device with the location of the sensing node requested by the first network device based on the location request from the first network device, so that the first network device may release the sensing task when determining that the sensing node leaves the target area. For example, the positioning of the sensing node is performed by the LMF.

In some embodiments, the location response includes location information of the sensing node.

In some embodiments, the step S520 includes: the third network device transmitting the location response to the first network device in a case where the sensing node leaves the second area.

For a specific example of the third network device performing the method 500 in the present embodiment, reference may be made to the relevant descriptions of the third network device in the above method 300. For the sake of brevity, details are not repeated here.

Hereinafter, the present application will be described in detail through specific embodiments with reference to the accompanying drawings.

### Embodiment I

In the present embodiment, the first network device being an SF is used as an example for description.

In the present embodiment, the SF may determine, according to a sensing result or sensing data, that a sensing target is about to or has already moved out of a sensing area, trigger reselection of a sensing node, and transmit a request to the sensing node to stop the sensing task of the current sensing node. Furthermore, the SF updates target location area information for a second network device such as a gateway mobile location center (GMLC), to facilitate the subsequent issuance of sensing requests by the second network device. In some embodiments, the sensing area refers to a range within which the sensing node of the sensing target can effectively perform sensing; and when the sensing target has moved out of the sensing area, the original sensing node cannot effectively sense the sensing target.

In the present embodiment, the sensing target is a non-UE.

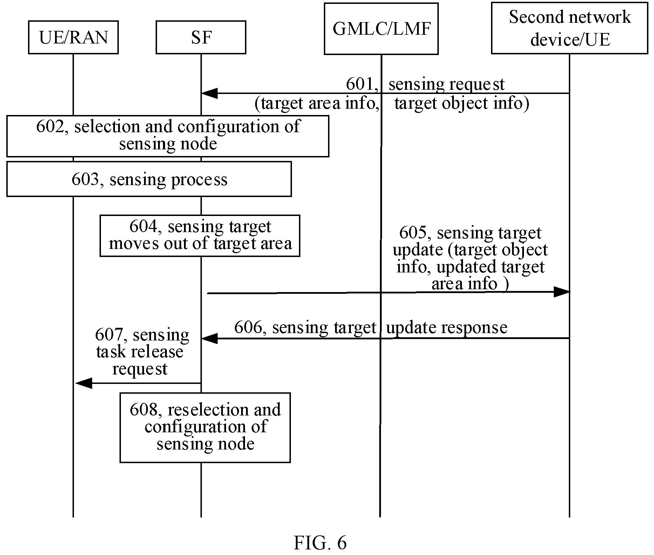

FIG. 6 is a flowchart of an implementation of Embodiment I of the present application, which includes the following operations.

In S601, a second network device or a UE transmits a sensing request to an SF. The sensing request includes target area information, and may further include target object information. The target object information may include at least one of: a target object identifier (target object ID) and identification information of a target object. The identification information of the target object may include at least one of: a user equipment identifier (UE ID) associated with the target object and feature information of the target object.

Here, the second network device may be referred to as a Consumer network function (NF). The Consumer NF may be an SF Client, an application function (AF), a network exposure function (NEF), a GMLC, an AMF or the like.

The first network device may be an SF, or may have other names. The first network device may also be co-located with other network elements, for example, it may be co-located with an LMF.

In S602, the SF performs selection and configuration of a sensing node based on a first area and the target object information in the sensing request. Here, the sensing node includes a radio access network (RAN) node and/or a UE node. The SF may select multiple sensing nodes to perform sensing processes.

In S603, the sensing node performs a sensing process and transmits sensing data to the SF.

In S604, the SF senses, according to the sensing data or a sensing result, that the sensing target is leaving the target area or has already left the target area. The SF may further determine, according to the sensing data or the sensing result, the new location of the sensing target after movement, and determine an updated first area based on the new location. Here, the sensing result may be determined by the SF according to the received sensing data.

In S605, the SF transmits an update message to the second network device or the UE. The update message may be a sensing target update message, and the update message includes the updated first area and may also include the target object information.

In S606, the second network device or the UE transmits an update response to the SF. The update response may be a sensing target update response, and the update response may include change acknowledgement information, the updated first area or the like.

In S607, the SF transmits a sensing task release request to the sensing node (RAN node or UE node) to stop the sensing task that has been configured for the sensing node.

In S608, the SF may reselect and configure a sensing node based on the updated first area for the subsequent sensing process.

According to the present embodiment, it is possible to support the SF in determining, according to the sensing data or the sensing result, that the sensing target leaves the target area, and in reverse notifying the network element or the UE that issues the sensing request to inform it of the new location information of the sensing target, thereby updating the sensing task, reselecting the sensing node, and so on.

### Embodiment II

In the present embodiment, the first network device being an SF and the third network device being an LMF are used as examples for description. In the present embodiment, the SF determines the location of a sensing node; and in a case where the sensing node leaves the target area, releases the sensing task and restarts a new sensing task. The sensing node in the present embodiment is a UE.

In the present embodiment, the SF subscribes to the location information of the sensing node. When the UE serving as the sensing node moves out of the target area, the SF stops the sensing task of the sensing node, and reselects and configures a new sensing node. In some embodiments, the target area is an area range determined by the SF for the UE serving as the sensing node; and when the UE serving as the sensing node leaves the target area, it may be considered unable to perform effective sensing.

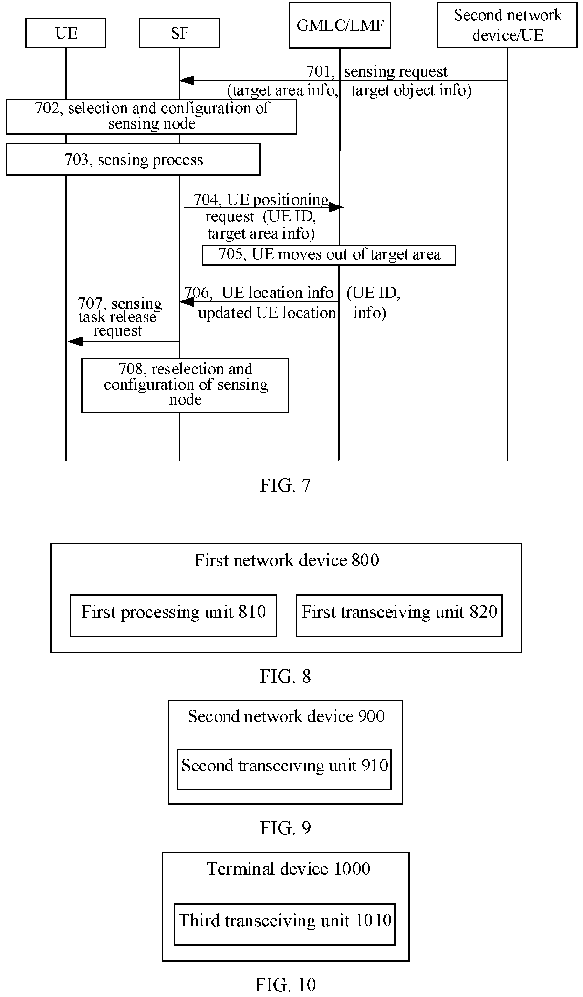

FIG. 7 is a flowchart of an implementation of Embodiment II of the present application, which includes the following operations.

In S701, a second network device or a UE transmits a sensing request to an SF. The sensing request includes target area information, and may further include target object information. The target object information may include at least one of: a target object identifier (target object ID) and identification information of a target object. The identification information of the target object may include at least one of: a user equipment identifier (UE ID) associated with the target object and feature information of the target object.

Here, the second network device may be referred to as a Consumer network function (NF). The Consumer NF may be an SF Client, an application function (AF), a network exposure function (NEF), a GMLC, an AMF or the like.

The first network device may be an SF, or may have other names. The first network device may also be co-located with other network elements, for example, it may be co-located with an LMF.

In S702, the SF performs selection and configuration of a sensing node based on a first area and the target object information in the sensing request. Here, the sensing node includes a radio access network (RAN) node and/or a UE node. The SF may select multiple sensing nodes to perform sensing processes.

In S703, the sensing node performs a sensing process and transmits sensing data to the SF.

In S704, the SF subscribes to location information of a UE from the LMF, where the UE is one or more of the sensing nodes selected by the SF in step S702. For example, the SF transmits a location request to the LMF, or the SF transmits a location request to the LMF via network elements such as a GMLC, an NEF or an AMF. The location request includes at least one of: a second area and information of the sensing node (i.e., the UE), and is used to determine whether the sensing node leaves the second area. For example, the location request may be a UE positioning request, and the sensing node information included in the UE positioning request may specifically be a UE ID.

Here, the SF may determine the second area according to the first area in the received sensing request, for example, by taking an area range indicated by the first area as the second area. If the second area is determined in such manner, this step may also be performed after step S701; for example, this step may be performed before step S702 or concurrently with steps S702 and S703.

Alternatively, the SF may determine the second area according to target location information and location information of the sensing node. Here, the target location information may be determined by the SF based on the sensing data received in step S703.

In S705, the sensing node (i.e., the UE) leaves the second area.

In S706, the LMF notifies the SF of the current location information of the sensing node (i.e., the UE), where the current location information is location information of the sensing node after movement. The LMF may directly transmit the current location information of the sensing node (i.e., the UE) to the SF; alternatively, the LMF may transmit the current location information of the sensing node (i.e., the UE) to the SF via network elements such as a GMLC, an NEF or an AMF. For example, the current location information of the sensing node (i.e., the UE) may be UE location information.

In S707, the SF transmits a sensing task release request to the sensing node (i.e., the UE) to stop the sensing task that has been configured for the sensing node (i.e., the UE).

In S708, the SF reselects and configures, according to the first area and the target object information in the sensing request, a sensing node for the subsequent sensing process.

According to the present embodiment, it is possible to support the SF in subscribing to the location of the UE serving as a sensing node, and when the location of the UE changes, releasing the current sensing task, triggering a new sensing task, and reselecting a suitable sensing node for sensing.

The embodiments of the present application further provide a first network device. FIG. 8 is a schematic block diagram of a first network device 800 according to an embodiment of the present application. The first network device 800 may include:
a first processing unit 810, configured to determine that a sensing target or a sensing node leaves a target area; and
a first transceiving unit 820, configured to transmit a sensing task release request to the sensing node.

In some embodiments, the first transceiving unit 820 is further configured to receive sensing data; and
the first processing unit 810 is configured to determine, according to the sensing data, that the sensing target leaves the target area.

In some embodiments, the first transceiving unit 820 is further configured to:
transmit an update message to a second network device or a terminal device, wherein the update message comprises at least one of: target object information or an updated first area; and
receive an update response transmitted by the second network device or the terminal device, wherein the update response comprises at least one of: acknowledgment information, the target object information or the updated first area.

In some embodiments, the sensing target includes a non-UE target.

In some embodiments, the first transceiving unit 820 is further configured to transmit a location request to a third network device, wherein the location request comprises at least one of: a second area or information of the sensing node; and receive a location response transmitted by the third network device; and
the first processing unit 810 is configured to determine, according to the location response, that the sensing node leaves the target area.

In some embodiments, the location response comprises location information of the sensing node.

In some embodiments, the first processing unit 810 is further configured to determine the second area according to a first area included in a sensing request.

In some embodiments, the first processing unit 810 is further configured to determine the second area according to at least one of target location information or location information of the sensing node.

In some embodiments, the first transceiving unit 820 is further configured to receive a sensing request transmitted by a second network device or a terminal device, wherein the sensing request comprises at least one of: a first area or target object information; and
the first processing unit is further configured to perform sensing based on the sensing request.

In some embodiments, the first processing unit 810 is further configured to reinitiate sensing after the first transceiving unit transmits the sensing task release request to the sensing node.

In some embodiments, the target object information comprises at least one of: a target object identifier or identification information of a target object.

In some embodiments, the identification information of the target object comprises at least one of: a user equipment identifier associated with the target object or object feature information of the target object.

In some embodiments, the first network device comprises an SF.

In some embodiments, the second network device comprises at least one of: an SF client, an AF, a GMLC, an NEF, or an AMF.

In some embodiments, the third network device comprises at least one of: a GMLC, an LMF, an AMF, or an NEF.

The first network device 800 in the embodiments of the present application is capable of implementing the corresponding functions of the first network device in the above method embodiments. The processes, functions, implementations and beneficial effects corresponding to various units (sub-units, units, components and so on) in the first network device 800 may refer to the corresponding descriptions in the above method embodiments, and will not be repeated here for brevity. It is to be noted that the functions described with respect to the various units (sub-units, units, components and so on) in the first network device 800 may be implemented by different units or by the same unit.

The embodiments of the present application further provide a second network device. FIG. 9 is a schematic block diagram of a second network device 900 according to an embodiment of the present application. The second network device 900 may include:
a second transceiving unit 910, configured to receive an update message transmitted by a first network device, wherein the update message comprises at least one of: target object information or an updated first area; and further configured to transmit an update response, wherein the update response comprises at least one of: acknowledgment information, the target object information or the updated first area.

In some embodiments, the second transceiving unit 910 is further configured to transmit a sensing request, wherein the sensing request comprises at least one of: a first area or the target object information.

In some embodiments, the target object information comprises at least one of: a target object identifier or identification information of a target object.

In some embodiments, the identification information of the target object comprises at least one of: a user equipment identifier associated with the target object or object feature information of the target object.

In some embodiments, the second network device comprises at least one of: an SF client, an AF, a GMLC, an NEF, or an AMF.

In some embodiments, the first network device comprises an SF.

The second network device 900 in the embodiments of the present application is capable of implementing the corresponding functions of the second network device in the above method embodiments. The processes, functions, implementations and beneficial effects corresponding to various units (sub-units, units, components and so on) in the second network device 900 may refer to the corresponding descriptions in the above method embodiments, and will not be repeated here for brevity. It is to be noted that the functions described with respect to the various units (sub-units, units, components and so on) in the second network device 900 may be implemented by different units or by the same unit.

The embodiments of the present application further provide a terminal device. FIG. 10 is a schematic block diagram of a terminal device 1000 according to an embodiment of the present application. The terminal device 1000 may include:
a third transceiving unit 1010, configured to receive an update message transmitted by a first network device, wherein the update message comprises at least one of: target object information or an updated first area; and further configured to transmit an update response, wherein the update response comprises at least one of: acknowledgment information, the target object information or the updated first area.

In some embodiments, the third transceiving unit 1010 is further configured to transmit a sensing request, wherein the sensing request comprises at least one of: a first area or the target object information.

In some embodiments, the target object information comprises at least one of: a target object identifier or identification information of a target object.

In some embodiments, the identification information of the target object comprises at least one of: a user equipment identifier associated with the target object or object feature information of the target object.

In some embodiments, the first network device comprises an SF.

The terminal device 1000 in the embodiment of the present application is capable of implementing the corresponding functions of the terminal device in the above method embodiments. The processes, functions, implementations and beneficial effects corresponding to various units (sub-units, units, components and so on) in the terminal device 1000 may refer to the corresponding descriptions in the above method embodiments, and will not be repeated here for brevity. It is to be noted that the functions described with respect to the various units (sub-units, units, components and so on) in the terminal device 1000 may be implemented by different units or by the same unit.

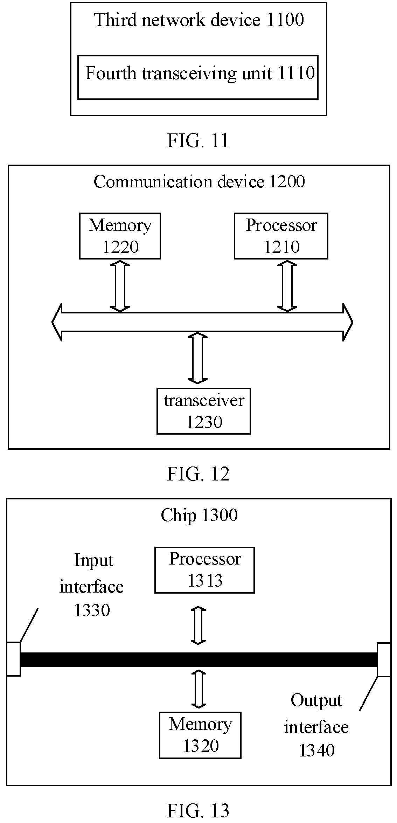

The embodiments of the present application further provide a third network device. FIG. 11 is a schematic block diagram of a third network device 1100 according to an embodiment of the present application. The third network device 1100 may include:
a fourth transceiving unit 1110, configured to receive a location request transmitted by a first network device, wherein the location request comprises at least one of: a second area or information of a sensing node; and further configured to transmit a location response to the first network device.

In some embodiments, the location response comprises location information of the sensing node.

In some embodiments, the fourth transceiving unit 1110 is configured to transmit the location response to the first network device in a case where the sensing node leaves the second area.

In some embodiments, the third network device comprises at least one of: a GMLC, an LMF, an AMF, or an NEF.

In some embodiments, the first network device comprises an SF.

The third network device 1100 in the embodiment of the present application is capable of implementing the corresponding functions of the third network device in the above method embodiments. The processes, functions, implementations and beneficial effects corresponding to various units (sub-units, units, components and so on) in the third network device 1100 may refer to the corresponding descriptions in the above method embodiments, and will not be repeated here for brevity. It is to be noted that the functions described with respect to the various units (sub-units, units, components and so on) in the third network device 1100 may be implemented by different units or by the same unit.

FIG. 12 is a schematic structural diagram of a communication device 1200 according to an embodiment of the present application. The communication device 1200 includes a processor 1210, and the processor may invoke a computer program from a memory and execute the computer program, to cause the communication device 1200 to implement the methods in the embodiments of the present application.

In an implementation, the communication device 1200 may further include a memory 1220. The processor 1210 may invoke a computer program from the memory 1220 and execute the computer program, to cause the communication device 1200 to implement the methods in the embodiments of the present application.

Here, the memory 1220 may be a separate device independent of the processor 1210, or may be integrated into the processor 1210.

In an implementation, the communication device 1200 may further include a transceiver 1230. The processor 1210 may control the transceiver 1230 to communicate with other devices, and specifically, to transmit information or data to other devices, or receive information or data transmitted by other devices.

Here, the transceiver 1230 may include a transmitter and a receiver. The transceiver 1230 may further include antenna(s), and the number of antenna(s) may be one or more.

In an implementation, the communication device 1200 may be the first network device in the embodiments of the present application, and the communication device 1200 may implement the corresponding procedures implemented by the first network device in the various methods in the embodiments of the present application, which will not be repeated here for the sake of brevity.

In an implementation, the communication device 1200 may be the second network device in the embodiments of the present application, and the communication device 1200 may implement the corresponding procedures implemented by the second network device in the various methods in the embodiments of the present application, which will not be repeated here for the sake of brevity.

In an implementation, the communication device 1200 may be the terminal device in the embodiments of the present application, and the communication device 1200 may implement the corresponding procedures implemented by the terminal device in the various methods in the embodiments of the present application, which will not be repeated here for the sake of brevity.

In an implementation, the communication device 1200 may be the third network device in the embodiments of the present application, and the communication device 1200 may implement the corresponding procedures implemented by the third network device in the various methods in the embodiments of the present application, which will not be repeated here for the sake of brevity.

FIG. 13 is a schematic structural diagram of a chip 1300 according to an embodiment of the present application. The chip 1300 includes a processor 1310, and the processor 1310 may invoke a computer program from a memory and execute the computer program, to implement the methods in the embodiments of the present application.

In an implementation, the chip 1300 may further include a memory 1320. The processor 1310 may invoke a computer program from the memory 1320 and execute the computer program, to implement the methods performed by a terminal device or a network device in the embodiments of the present application.

Here, the memory 1320 may be a separate device independent of the processor 1310, or may be integrated into the processor 1310.

In an implementation, the chip 1300 may further include an input interface 1330. The processor 1310 may control the input interface 1330 to communicate with other devices or chips, and specifically, the input interface 1330 may obtain information or data transmitted by other devices or chips.

In an implementation, the chip 1300 may further include an output interface 1340. The processor 1310 may control the output interface 1340 to communicate with other devices or chips, and specifically, the output interface 1340 may output information or data to other devices or chips.

In an implementation, the chip may be applied to the first network device in the embodiments of the present application, and the chip may implement the corresponding procedures implemented by the network device in the various methods in the embodiments of the present application, which will not be repeated here for the sake of brevity.

In an implementation, the chip may be applied to the second network device in the embodiments of the present application, and the chip can implement the corresponding procedures implemented by the network device in the various methods of the embodiments of the present application, which will not be repeated here for the sake of brevity.

In an implementation, the chip may be applied to the terminal device in the embodiments of the present application, and the chip may implement the corresponding procedures implemented by the terminal device in the various methods in the embodiments of the present application, which will not be repeated here for the sake of brevity.

In an implementation, the chip may be applied to the third network device in the embodiments of the present application, and the chip can implement the corresponding procedures implemented by the third network device in the various methods in the embodiments of the present application, which will not be repeated here for the sake of brevity.

The chips applied to the network device and the terminal device may be the same chip or different chips.

It should be understood that the chip mentioned in the embodiments of the present application may also be referred to as a system on chip, a system chip, a chip system or a system-on-chip chip, or the like.

The above processor may be a general-purpose processor, a digital signal processor (DSP), a field programmable gate array (FPGA), an application specific integrated circuit (ASIC) or other programmable logic devices, transistor logic devices, discrete hardware components, or the like. The general-purpose processor mentioned above may be a microprocessor, any conventional processor, or the like.

The above memory may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the above memory is exemplary but not limiting illustration, for example, the memory in embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present application is intended to include, but not limited to, these and any other suitable types of memories.

The above embodiments may be implemented in whole or in part through software, hardware, firmware, or any combination thereof. When implemented by using software, the embodiments may be implemented in a form of a computer program product in whole or in part. The computer program product includes one or more computer instructions. When the computer program instructions are loaded on and executed by a computer, processes or functions described in the embodiments of the present application are generated in whole or in part. The computer may be a general-purpose computer, a dedicated computer, a computer network, or any other programmable devices. The computer instructions may be stored in a computer-readable storage medium or transmitted from one computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It is to be understood that, in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the systems, apparatuses and units described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A sensing method, comprising:
determining, by a first network device, that a sensing target or a sensing node leaves a target area; and
transmitting, by the first network device, a sensing task release request to the sensing node.

2. The method according to claim 1, wherein determining, by the first network device, that the sensing target leaves the target area comprises:
receiving, by the first network device, sensing data; and
determining, by the first network device according to the sensing data, that the sensing target leaves the target area.

3. The method according to claim 1 or 2, wherein after determining, by the first network device, that the sensing target leaves the target area, the method further comprises:
transmitting, by the first network device, an update message to a second network device or a terminal device, wherein the update message comprises at least one of: target object information or an updated first area; and
receiving, by the first network device, an update response transmitted by the second network device or the terminal device, wherein the update response comprises at least one of: acknowledgment information, the target object information or the updated first area.

4. The method according to any one of claims 1 to 3, wherein the sensing target comprises a non-user equipment (UE) target.

5. The method according to claim 1, wherein determining, by the first network device, that the sensing node leaves the target area comprises:
transmitting, by the first network device, a location request to a third network device, wherein the location request comprises at least one of: a second area or information of the sensing node;
receiving, by the first network device, a location response transmitted by the third network device; and
determining, by the first network device according to the location response, that the sensing node leaves the target area.

6. The method according to claim 5, wherein the location response comprises location information of the sensing node.

7. The method according to claim 5 or 6, wherein before transmitting, by the first network device, the location request to the third network device, the method further comprises:
determining, by the first network device, the second area according to a first area included in a sensing request.

8. The method according to claim 5 or 6, wherein before transmitting, by the first network device, the location request to the third network device, the method further comprises:
determining, by the first network device, the second area according to at least one of target location information or location information of the sensing node.

9. The method according to any one of claims 1 to 8, wherein before determining, by the first network device, that the sensing target or the sensing node leaves the target area, the method further comprises:
receiving, by the first network device, a sensing request transmitted by a second network device or a terminal device, wherein the sensing request comprises at least one of: a first area or target object information; and
performing, by the first network device, sensing based on the sensing request.

10. The method according to any one of claims 1 to 9, wherein after transmitting, by the first network device, the sensing task release request to the sensing node, the method further comprises:
reinitiating, by the first network device, sensing.

11. The method according to claim 3 or 9, wherein the target object information comprises at least one of: a target object identifier or identification information of a target object.

12. The method according to claim 11, wherein the identification information of the target object comprises at least one of: a user equipment identifier associated with the target object or object feature information of the target object.

13. The method according to any one of claims 1 to 12, wherein the first network device comprises a sensing function (SF).

14. The method according to claim 3 or 9, wherein the second network device comprises at least one of: an SF client, an application function (AF), a gateway mobile location center (GMLC), a network exposure function (NEF), or an access and mobility management function (AMF).

15. The method according to any one of claims 5 to 8, wherein the third network device comprises at least one of: a GMLC, a location management function (LMF), an AMF, or an NEF.

16. A sensing method, comprising:
receiving, by a second network device or a terminal device, an update message transmitted by a first network device, wherein the update message comprises at least one of: target object information or an updated first area; and
transmitting, by the second network device or the terminal device, an update response, wherein the update response comprises at least one of: acknowledgment information, the target object information or the updated first area.

17. The method according to claim 16, wherein before receiving, by the second network device or the terminal device, the update message transmitted by the first network device, the method further comprises:
transmitting, by the second network device or the terminal device, a sensing request, wherein the sensing request comprises at least one of: a first area or the target object information.

18. The method according to claim 16 or 17, wherein the target object information comprises at least one of: a target object identifier or identification information of a target object.

19. The method according to claim 18, wherein the identification information of the target object comprises at least one of: a user equipment identifier associated with the target object or object feature information of the target object.

20. The method according to any one of claims 16 to 19, wherein the second network device comprises at least one of: an SF client, an AF, a GMLC, an NEF, or an AMF.

21. The method according to any one of claims 16 to 20, wherein the first network device comprises an SF.

22. A sensing method, comprising:
receiving, by a third network device, a location request transmitted by a first network device, wherein the location request comprises at least one of: a second area or information of a sensing node; and
transmitting, by the third network device, a location response to the first network device.

23. The method according to claim 22, wherein the location response comprises location information of the sensing node.

24. The method according to claim 22 or 23, wherein transmitting, by the third network device, the location response to the first network device comprises:
transmitting, by the third network device, the location response to the first network device in a case where the sensing node leaves the second area.

25. The method according to any one of claims 22 to 24, wherein the third network device comprises at least one of: a GMLC, an LMF, an AMF, or an NEF.

26. The method according to any one of claims 22 to 25, wherein the first network device comprises an SF.

27. A first network device, comprising:
a first processing unit, configured to determine that a sensing target or a sensing node leaves a target area; and
a first transceiving unit, configured to transmit a sensing task release request to the sensing node.

28. The first network device according to claim 27, wherein
the first transceiving unit is further configured to receive sensing data; and
the first processing unit is configured to determine, according to the sensing data, that the sensing target leaves the target area.

29. The first network device according to claim 27 or 28, wherein the first transceiving unit is further configured to:
transmit an update message to a second network device or a terminal device, wherein the update message comprises at least one of: target object information or an updated first area; and
receive an update response transmitted by the second network device or the terminal device, wherein the update response comprises at least one of: acknowledgment information, the target object information or the updated first area.

30. The first network device according to any one of claims 27 to 29, wherein the sensing target comprises a non-UE target.

31. The first network device according to claim 27, wherein
the first transceiving unit is further configured to transmit a location request to a third network device, wherein the location request comprises at least one of: a second area or information of the sensing node; and receive a location response transmitted by the third network device; and
the first processing unit is configured to determine, according to the location response, that the sensing node leaves the target area.

32. The first network device according to claim 31, wherein the location response comprises location information of the sensing node.

33. The first network device according to claim 31 or 32, wherein the first processing unit is further configured to determine the second area according to a first area included in a sensing request.

34. The first network device according to claim 32 or 33, wherein the first processing unit is further configured to determine the second area according to at least one of target location information or location information of the sensing node.

35. The first network device according to any one of claims 27 to 34, wherein
the first transceiving unit is further configured to receive a sensing request transmitted by a second network device or a terminal device, wherein the sensing request comprises at least one of: a first area or target object information; and
the first processing unit is further configured to perform sensing based on the sensing request.

36. The first network device according to any one of claims 27 to 35, wherein
the first processing unit is further configured to reinitiate sensing after the first transceiving unit transmits the sensing task release request to the sensing node.

37. The first network device according to claim 29 or 35, wherein the target object information comprises at least one of: a target object identifier or identification information of a target object.

38. The first network device according to claim 37, wherein the identification information of the target object comprises at least one of: a user equipment identifier associated with the target object or object feature information of the target object.

39. The first network device according to any one of claims 27 to 38, wherein the first network device comprises an SF.

40. The first network device according to claim 29 or 35, wherein the second network device comprises at least one of: an SF client, an AF, a GMLC, an NEF, or an AMF.

41. The first network device according to any one of claims 31 to 34, wherein the third network device comprises at least one of: a GMLC, an LMF, an AMF, or an NEF.

42. A second network device, comprising:
a second transceiving unit, configured to receive an update message transmitted by a first network device, wherein the update message comprises at least one of: target object information or an updated first area; and further configured to transmit an update response, wherein the update response comprises at least one of: acknowledgment information, the target object information or the updated first area.

43. The second network device according to claim 42, wherein the second transceiving unit is further configured to transmit a sensing request, wherein the sensing request comprises at least one of: a first area or the target object information.

44. The second network device according to claim 42 or 43, wherein the target object information comprises at least one of: a target object identifier or identification information of a target object.

45. The second network device according to claim 44, wherein the identification information of the target object comprises at least one of: a user equipment identifier associated with the target object or object feature information of the target object.

46. The second network device according to any one of claims 42 to 45, wherein the second network device comprises at least one of: an SF client, an AF, a GMLC, an NEF, or an AMF.

47. The second network device according to any one of claims 42 to 46, wherein the first network device comprises an SF.

48. A terminal device, comprising:
a third transceiving unit, configured to receive an update message transmitted by a first network device, wherein the update message comprises at least one of: target object information or an updated first area; and further configured to transmit an update response, wherein the update response comprises at least one of: acknowledgment information, the target object information or the updated first area.

49. The terminal device according to claim 48, wherein the third transceiving unit is further configured to transmit a sensing request, wherein the sensing request comprises at least one of: a first area or the target object information.

50. The terminal device according to claim 48 or 49, wherein the target object information comprises at least one of: a target object identifier or identification information of a target object.

51. The terminal device according to claim 50, wherein the identification information of the target object comprises at least one of: a user equipment identifier associated with the target object or object feature information of the target object.

52. The terminal device according to any one of claims 48 to 51, wherein the first network device comprises an SF.

53. A third network device, comprising:
a fourth transceiving unit, configured to receive a location request transmitted by a first network device, wherein the location request comprises at least one of: a second area or information of a sensing node; and further configured to transmit a location response to the first network device.

54. The third network device according to claim 53, wherein the location response comprises location information of the sensing node.

55. The third network device according to claim 53 or 54, wherein the fourth transceiving unit is configured to transmit the location response to the first network device in a case where the sensing node leaves the second area.

56. The third network device according to any one of claims 53 to 55, wherein the third network device comprises at least one of: a GMLC, an LMF, an AMF, or an NEF.

57. The third network device according to any one of claims 53 to 56, wherein the first network device comprises an SF.

58. A communication device, comprising: a transceiver, a processor and a memory, wherein the memory is configured to store a computer program, the transceiver is configured to communicate with other devices, and the processor is configured to invoke the computer program stored in the memory and execute the computer program, to cause a network device to perform the method according to any one of claims 1 to 26.

59. A chip, comprising: a processor, configured to invoke a computer program from a memory and execute the computer program, to cause a device equipped with the chip to perform the method according to any one of claims 1 to 26.

60. A computer-readable storage medium, configured to store a computer program which, when executed by a device, causes the device to perform the method according to any one of claims 1 to 26.

61. A computer program product, comprising: computer program instructions, wherein the computer program instructions cause a computer to perform the method according to any one of claims 1 to 26.

62. A computer program, wherein the computer program causes a computer to perform the method according to any one of claims 1 to 26.
